# EUROPÄISCHE PATENTSCHRIFT

(11) **EP 3 193 195 B1**
(45) Veröffentlichungstag und Bekanntmachung des Hinweises auf die Patenterteilung: **25.07.2018**
(21) Anmeldenummer: 16151704.0
(22) Anmeldetag: 18.01.2016
(51) Int. Cl.: G02B 5/10, G01N 21/27, G02B 26/02, G02B 26/08

(54) **OPTISCHER SENSOR**
OPTICAL SENSOR
CAPTEUR OPTIQUE

(43) Veröffentlichungstag der Anmeldung: 19.07.2017
(73) Patentinhaber: SICK Engineering GmbH, 01458 Ottendorf-Okrilla (DE)
(72) Erfinder: Klinder, Kai, 01458 Ottendorf-Okrilla (DE)
(74) Vertreter: Manitz Finsterwald Patentanwälte PartmbB

(56) Entgegenhaltungen:
- WO-A1-2006/087219
- US-A- 4 578 762
- US-A1- 2006 187 528

## Beschreibung

Die vorliegende Erfindung betrifft einen optischen Sensor umfassend einen Lichtsender zum Aussenden von Sendelichtstrahlen in einen Messbereich, einen Lichtempfänger zum Empfangen von Empfangslichtstrahlen aus dem Messbereich, eine Auswerteeinheit zum Ermitteln einer Eigenschaft des Messbereichs anhand der von dem Lichtempfänger empfangenen Empfangslichtstrahlen, wenigstens eine Spiegeleinheit zur Steuerung der Sendelichtstrahlen und/oder der Empfangslichtstrahlen, wobei die Spiegeleinheit mehrere Mikrospiegelelemente mit wenigstens bereichsweise reflektierender Oberfläche und eine mit den Mikrospiegelelementen in elektrischer Verbindung stehende Elektroden-Anordnung umfasst, und eine Steuereinrichtung, die dazu ausgebildet ist, die wenigstens eine Spiegeleinheit durch Ansteuern der Elektroden-Anordnung zwischen wenigstens zwei unterschiedlichen Funktionszuständen zu verstellen.

Derartige Sensoren werden in vielfältiger Weise für Überwachungs- und Messaufgaben eingesetzt, beispielsweise in Form von Staubmessgeräten, Nebelmessgeräten, Gaskonzentrationsmessgeräten, Spektrometern und dergleichen. Je nach Anwendung wird hierbei das durch den Messbereich transmittierte, das von dem Messbereich reflektierte oder das aus dem Messbereich heraus in einen bestimmten Raumwinkelbereich gestreute Licht durch den Lichtempfänger erfasst. Ein weiteres Einsatzgebiet optischer Sensoren ist das Erkennen von Objekten oder die Ermittlung bestimmter Eigenschaften von Objekten, welche sich im Messbereich befinden. Für derartige Aufgaben werden z. B. Lichttaster, Lichtschranken, Lichtgitter, Farbsensoren oder Scanner verwendet.

Spiegeleinheiten, die auf einer Anordnung von beweglichen und elektrisch kontaktierten Mikrospiegelelementen beruhen, werden auf dem Fachgebiet auch als Mikrospiegelarrays oder MEMS-Spiegelarrays (MEMS von microelectromechanical system) bezeichnet. Im Vergleich zu Strahlformungsoptiken mit beweglichen makroskopischen Spiegeln oder Strahlteilern haben Mikrospiegelarrays den Vorteil, dass der Funktionszustand des Sensors rein elektrisch und mit kurzer Schaltzeit verstellbar ist. Zudem ist der Platzbedarf von Mikrospiegelarrays gering.

Die Mikrospiegelelemente können als flache, ebene oder gekrümmte Lamellen ausgeführt sein, die schwenkbar an einem Trägerbauteil gelagert sind. Derartige Mikrospiegelelemente werden auch als "vanes" bezeichnet und sind beispielsweise in der US 8 325 409 B2 offenbart.

Die US 4 578 762 A offenbart ein Gasanalysegerät, das einen Mechanismus zur Selbstkalibrierung aufweist. Der Mechanismus umfasst zwei synchronisiert rotierende Chopper-Räder, deren Öffnungen teilweise frei, teilweise mit transparenten und gasgefüllten Vergleichszellen versehen und teilweise durch einen ebenen Spiegel abgedeckt sind.

In der WO 2006/087219 A1 ist eine Mikroanzeige für Digitalkameras, Projektoren und dergleichen offenbart, deren Pixel auf schwenkbaren Verschlussklappen beruhen. Die Verschlussklappen sind mittels jeweiliger Drehgelenke an einem Rahmen angelenkt und verschließen in der geschlossenen Stellung jeweilige Durchgangsöffnungen des Rahmens.

Die US 2006/187528 A1 offenbart einen räumlichen Lichtmodulator für hintergrundbeleuchtete Displays. Der Lichtmodulator beruht auf einem optischen Resonator, dessen Vorderfläche und Rückfläche reflektive Eigenschaften aufweisen. Zum selektiven Auskoppeln von Licht aus dem Resonator sind Durchgangsöffnungen vorgesehen, die mittels beweglicher Verschlusselemente bedarfsweise verschließbar sind.

Mikrospiegelarrays werden in optischen Sensoren üblicherweise ausschließlich in Reflexion betrieben. Die beiden Funktionszustände der Spiegeleinheit entsprechen hierbei unterschiedlichen Reflexionswinkeln, das heißt je nach Funktionszustand wird das einfallende Licht unterschiedlich stark umgelenkt. Die Gestaltungsmöglichkeiten für die den Funktionszuständen zugeordneten optischen Pfade des Sensors sind hierbei eingeschränkt.

Es ist eine Aufgabe der Erfindung, einen optischen Sensor der eingangs genannten Art bereitzustellen, der erweiterte Gestaltungsmöglichkeiten aufweist.

Die Lösung der Aufgabe erfolgt durch einen optischen Sensor mit den Merkmalen des Anspruchs 1.

Erfindungsgemäß ist vorgesehen, dass die wenigstens zwei unterschiedlichen Funktionszustände einen Transmissionszustand und einen Reflexionszustand umfassen, dass die Spiegeleinheit ein zumindest im Wesentlichen transparentes Substrat umfasst, an dem die Mikrospiegelelemente angeordnet sind, und dass die Steuereinrichtung dazu ausgebildet ist, die Spiegeleinheit zeitweilig in den Transmissionszustand zu stellen, in welchem die Mikrospiegelelemente jeweils gegenüber der Lichteinfallsfläche oder der Lichtaustrittsfläche des Substrats um einen Kippwinkel gekippt werden, so dass sich die Mikrospiegelelemente in einer geöffneten Stellung befinden und auf die Spiegeleinheit einfallende Lichtstrahlung an den Mikrospiegelelementen vorbei durch das transparente Substrat hindurchgelangt.

Erfindungsgemäß wurde erkannt, dass durch das zeitweilige Betreiben eines Mikrospiegelarrays in Transmission optische Pfade in Sensoren definiert werden können, die bislang nur unter Inkaufnahme beträchtlicher Nachteile möglich waren. Beispielsweise kann eine umlenkungsfreie Strahlführung ohne Einsatz von beweglichen makroskopischen Spiegeln oder Strahlteilern bewerkstelligt werden. Ein erfindungsgemäßer Sensor ist somit besonders kompakt, kostengünstig und wartungsfreundlich. Der Verzicht auf bewegte makroskopische Teile ermöglicht zudem einen stromsparenden Betrieb.

Die Mikrospiegelelemente können jeweils zwischen der geöffneten Stellung und einer geschlossenen Stellung schwenkbar sein. Vorzugsweise umfassen die Mikrospiegelelemente jeweils einen Siliziumoxinitrid-Träger mit einer reflektierenden Aluminium-Beschichtung. Die Größe der Mikrospiegelelemente beträgt bevorzugt höchstens 1 mm² und besonders bevorzugt höchstens 0,5 mm². Um ein möglichst störungsfreies Durchstrahlen der in dem Transmissionszustand befindlichen Spiegeleinheit zu gewährleisten, kann die Elektroden-Anordnung eine auf das Substrat aufgebrachte transparente Schicht umfassen, welche mit den Mikrospiegelelementen in elektrischem Kontakt steht.

Erfindungsgemäß ist vorgesehen, dass die Sendelichtstrahlen durch das Substrat der Spiegeleinheit hindurch ohne Durchquerung des Messbereichs zum Lichtempfänger gelangen, wenn die Spiegeleinheit in den Transmissionszustand gestellt ist. Dies ermöglicht auf einfache Weise die Erfassung der Intensität des ungeschwächten Lichts, beispielsweise für Referenz- oder Regelungszwecke.

Die Steuereinrichtung ist erfindungsgemäß dazu ausgebildet, die wenigstens eine Spiegeleinheit zeitweilig in einen Reflexionszustand zu stellen, in welchem die Mikrospiegelelemente auf der Lichteinfallsfläche oder auf der Lichtaustrittsfläche des Substrats liegen, so dass die Mikrospiegelelemente die Lichteinfallsfläche oder die Lichtaustrittsfläche des Substrats wenigstens teilweise bedecken, wobei die Spiegeleinheit die Sendelichtstrahlen in den Messbereich umlenkt, wenn sie in den Reflexionszustand gestellt ist.

Die Steuereinrichtung kann insbesondere dazu ausgebildet sein, die Spiegeleinheit bei Vorliegen eines Kontroll-, Abgleich- oder Korrekturkriteriums in den Trans missionszustand zu stellen. Häufig ist es für die Zuverlässigkeit der Messung wichtig, während des Sensorbetriebs zeitweilig für den Empfang eines Referenzsignals zu sorgen, welches nicht durch den Messbereich beeinflusst ist. Insbesondere ist der Empfang eines ungeschwächten Referenzsignals für eine Leistungsregelung des Lichtsenders, für eine Korrektur einer Nullpunktsdrift und für eine Verschmutzungsprüfung bedeutsam.

Die Mikrospiegelelemente sind also gegenüber einer Lichteinfallsfläche des Substrats um einen Kippwinkel gekippt, wenn die Spiegeleinheit in den Transmissionszustand gestellt ist. Der Kippwinkel beträgt vorzugsweise zwischen 40° und 50°. Beispielsweise kann der Kippwinkel etwa 45° betragen.

Gemäß einer bevorzugten Ausgestaltung der Erfindung ist die Spiegeleinheit derart angeordnet, dass die Mikrospiegelelemente zumindest im Wesentlichen parallel zu einer Haupteinfallsrichtung der Sendelichtstrahlen oder der Empfangslichtstrahlen ausgerichtet sind, wenn die Spiegeleinheit in den Transmissionszustand gestellt ist. Bei dieser Ausgestaltung verlaufen die Flachseiten der Mikrospiegelelemente also parallel zum einfallenden Licht, wenn die Spiegeleinheit in den Transmissionszustand gestellt ist. Dadurch wird das auf die Spiegeleinheit auftreffende Licht von den geöffneten Mikrospiegelelementen praktisch nicht blockiert, sodass die Transmissionsverluste gering sind.

Vorzugsweise bedecken die Mikrospiegelelemente in dem Reflexionszustand die Lichteinfallsfläche oder die Lichtaustrittsfläche der Spiegeleinheit zu wenigstens 75% und besonders bevorzugt zu wenigstens 90%. Ein hoher Bedeckungsgrad ermöglicht eine besonders verlustarme Strahlumlenkung.

Die Steuereinrichtung kann dazu ausgebildet sein, die Spiegeleinheit während des Sensorbetriebs zyklisch zwischen dem Reflexionszustand und dem Transmissionszustand zu verstellen. Dadurch ist es möglich, die vorstehend erwähnten Kontroll-, Abgleich- oder Korrekturmaßnahmen während des Sensorbetriebs gewissermaßen ständig durchzuführen, woraus ein besonders exakter und zuverlässiger Betrieb resultiert und unerwünschte Datenlücken vermieden werden. Bei Verwendung eines beweglichen makroskopischen Spiegels ist ein zyklisches Durchführen von Kontroll-, Abgleich- oder Korrekturmaßnahmen aufgrund der relativ langen Schaltzeit im Allgemeinen impraktikabel.

Eine spezielle Ausgestaltung der Erfindung sieht vor, dass der Lichtsender und der Lichtempfänger auf einem geradlinigen optischen Pfad angeordnet sind und der Messbereich von dem geradlinigen optischen Pfad beabstandet ist, wobei die Spiegeleinheit die Sendelichtstrahlen zum Umlenken in den Messbereich aus dem geradlinigen optischen Pfad auskoppelt, wenn sie in den Reflexionszustand gestellt ist. Die Sendelichtstrahlen gelangen bei dieser Ausgestaltung ohne Durchquerung des Messbereichs direkt zum Lichtempfänger, wenn die Spiegeleinheit in den Transmissionszustand gestellt ist. Dadurch ist eine besonders zuverlässige und unverfälschte Erfassung der Ausgangsintensität des Lichtsenders möglich. In dem geradlinigen optischen Pfad kann ein Kalibrierelement wie z. B. ein Trübungsfilter angeordnet sein. Dies ermöglicht z. B. eine Abstimmung der Ausgangsleistung des Lichtsenders auf die Empfindlichkeit des Lichtempfängers.

Der Sensor kann eine weitere Spiegeleinheit umfassen, welche ein zumindest im Wesentlichen transparentes Substrat mit daran angeordneten Mikrospiegelelementen umfasst und welche zwischen einem Transmissionszustand und einem Reflexionszustand verstellbar ist, wobei die weitere Spiegeleinheit die aus dem Messbereich tretenden Empfangslichtstrahlen in den geradlinigen optischen Pfad einkoppelt, wenn sie in den Reflexionszustand gestellt ist. Da beide Spiegeleinheiten einen Transmissionszustand einnehmen können, kann auch bei dieser Ausgestaltung eine direkte und geradlinige Strahlführung vom Lichtsender bis zum Lichtempfänger vorgesehen werden.

Gemäß einer weiteren Ausführungsform der Erfindung sind die Mikrospiegelelemente durch jeweilige Einzel-Elektroden der Elektroden-Anordnung individuell ansteuerbar. Dies erweitert die Einsatzmöglichkeiten der Spiegeleinheit, da die Mikrospiegelelemente beispielsweise lediglich bereichsweise geöffnet werden können. Bei einer individuellen Ansteuerbarkeit der Mikrospiegelelemente kann die Spiegeleinheit weit mehr als zwei unterschiedliche Funktionszustände einnehmen.

Insbesondere kann die Steuereinrichtung dazu ausgebildet sein, die Spiegeleinheit durch Ansteuern der Einzel-Elektroden zeitweilig in einen teildurchlässigen Zustand zu stellen, in welchem sich lediglich ein Teil der Mikrospiegelelemente in einer geöffneten Stellung befindet. In dem teildurchlässigen Zustand gelangt ein Teil des auf die Spiegeleinheit einfallenden Lichts durch das transparente Substrat hindurch und ein Teil wird reflektiert. Der Transmissionsgrad der Spiegeleinheit kann auf diese Weise über die Steuereinrichtung auf einen gewünschten Wert eingestellt werden. Die Steuereinrichtung kann dazu ausgebildet sein, für Testzwecke einerseits eine empfängerseitige Spiegeleinheit in den Reflexionszustand zu stellen und andererseits eine senderseitige Spiegeleinheit in einen teildurchlässigen Zustand zu stellen. Der durch die senderseitige Spiegeleinheit hindurchgelangende Anteil des einfallenden Lichts wird durch die empfängerseitige Spiegeleinheit blockiert, sodass auf diese Weise die zum Lichtempfänger gelangende Lichtmenge gestuft verringert werden kann, um so beispielsweise einen "Spantest" auszuführen.

Gemäß einer weiteren Ausgestaltung der Erfindung ist die Steuereinrichtung dazu ausgebildet, die Spiegeleinheit durch Ansteuern der Einzel-Elektroden zumindest zeitweilig in einen Abbildungszustand zu stellen, in welchem die Mikrospiegelelemente gegenüber einer Lichteinfallsfläche oder einer Lichtaustrittsfläche des Substrats derart um unterschiedliche Kippwinkel gekippt sind, dass die Spiegeleinheit insgesamt eine konkav oder konvex gewölbte Spiegelfläche definiert. Hiermit ist gemeint, dass der durch die unterschiedlich gekippten Mikrospiegelelemente sich angenähert ergebende, letztlich durch aufeinanderfolgende ebene Abschnitte gebildete Gesamtverlauf der Spiegelfläche einen gewölbten makroskopischen Spiegel mit kontinuierlicher Krümmung nachbildet. Die Sendelichtstrahlen oder die Empfangslichtstrahlen können somit durch die Spiegeleinheit z. B. auf einen bestimmten Bereich fokussiert werden.

Insbesondere kann vorgesehen sein, dass der Lichtsender und die Spiegeleinheit in einem geschlossenen Gehäuse angeordnet sind, welches wenigstens ein Messfenster umfasst, und dass die Spiegeleinheit eine Fokussierung der Sendelichtstrahlen auf eine Oberfläche des Messfensters bewirkt, wenn sie in den Abbildungszustand gestellt ist. Dadurch ist eine intensive Beleuchtung der Fensteroberfläche möglich, was beispielsweise für eine Verschmutzungsprüfung genutzt werden kann. Ein Verschmutzungssensor in Form eines zusätzlichen Lichtempfängers kann in dem Gehäuse angeordnet sein, um das von Ablagerungen reflektierte und/oder gestreute Licht zu erfassen. Vorzugsweise ist ein solcher Verschmutzungssensor in unmittelbarer Umgebung des Messfensters angeordnet.

Der Lichtsender und der Lichtempfänger können in einem geschlossenen Gehäuse angeordnet sein, welches wenigstens ein Messfenster umfasst, wobei sich der Messbereich außerhalb des Gehäuses befindet und der Sensor einen Reflektor umfasst, der die Lichtstrahlen nach Durchqueren des Messbereichs zurück in das Gehäuse lenkt. Diese Ausgestaltung eignet sich insbesondere für explosionsgeschützte Geräte. Das Messfenster kann leicht schräg sein, um die Verluste durch Reflexion an den Grenzflächen gering zu halten.

Die Spiegeleinheit kann in den Reflektor integriert sein. Wenn die in den Reflektor integrierte Spiegeleinheit in den Transmissionszustand gestellt ist, wird kein Licht ins Sensorgehäuse zurückreflektiert, sodass der Lichtempfänger ausschließlich Streulicht aus dem Messbereich detektiert. Dies kann für eine gezielte Streulichtmessung genutzt werden. Um eine unerwünschte Lichtabstrahlung in die Umgebung zu vermeiden, kann der Reflektor eine Lichtfalle umfassen, die vom Gehäuse aus gesehen hinter der Spiegeleinheit angeordnet ist. Gemäß einer speziellen Ausgestaltung ist eine weitere, gegenläufig ausgerichtete Spiegeleinheit mit transparentem Substrat in den Reflektor integriert.

Der Reflektor kann auch eine Vielzahl von wie vorstehend beschriebenen Spiegeleinheiten aufweisen, die in der Konfiguration eines Katzenauges angeordnet sind. Auf diese Weise kann ein relativ großflächiger Reflektor aus kompakten Mikrospiegelarrays zusammengesetzt werden.

Eine weitere Ausführungsform der Erfindung sieht vor, dass der Sensor wenigstens einen Aktuator zum Verschieben und/oder Verdrehen der Spiegeleinheit umfasst. Mittels des Aktuators kann der Sendelichtstrahl exakt auf den Reflektor ausgerichtet werden. Der Aktuator ist vorzugsweise als piezoelektrischer Aktuator ausgeführt. Am Reflektor können Positionssensoren, beispielsweise in Form weiterer Lichtempfänger, angeordnet sein, um den Ausrichtvorgang zu erleichtern.

Die erfindungsgemäßen Prinzipien können grundsätzlich bei allen gebräuchlichen Typen von optischen Sensoren zur Anwendung kommen, wie z. B. bei Lichttastern, Lichtschranken, Lichtgittern, Scannern und dergleichen. Die Vorteile der Erfindung kommen jedoch insbesondere bei Transmissiometern und Streulichtmessgeräten zum Tragen.

Weiterbildungen der Erfindung sind auch in den abhängigen Ansprüchen, der Beschreibung sowie der beigefügten Zeichnung angegeben.

Die Erfindung wird nachfolgend beispielhaft anhand der Zeichnung beschrieben.
- Fig. 1: ist eine Prinzipdarstellung einer Ausgestaltung eines erfindungsgemäßen optischen Sensors in einem Normalmodus.
- Fig. 2: ist eine vergrößerte Teildarstellung einer in einem erfindungsgemäßen optischen Sensor zu verwendenden Spiegeleinheit, wobei sich Mikrospiegelelemente der Spiegeleinheit in einer geschlossenen Stellung befinden.
- Fig. 3: zeigt die in Fig. 2 dargestellte Spiegeleinheit mit Mikrospiegelelementen, die sich in einer geöffneten Stellung befinden.
- Fig. 4: zeigt einen Teil des in Fig. 1 dargestellten Sensors in einem Kontrollmodus.
- Fig. 5: zeigt einen Teil des in Fig. 1 dargestellten Sensors in einem Testmodus.
- Fig. 6: zeigt einen Teil des in Fig. 1 dargestellten Sensors in einem Streulichterfassungsmodus.
- Fig. 7: zeigt einen Teil des in Fig. 1 dargestellten Sensors in einem Verschmutzungsprüfmodus.
- Fig. 8: zeigt eine alternative Ausgestaltung eines erfindungsgemäßen optischen Sensors in einem Justiermodus.

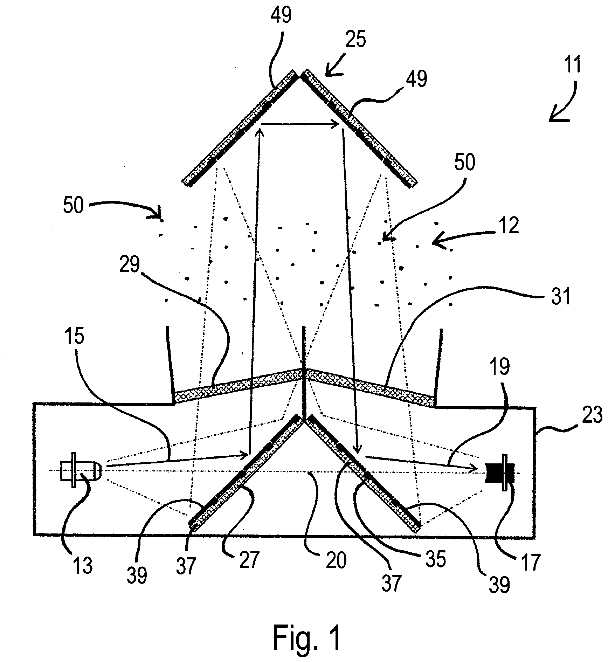

Der in Fig. 1 lediglich schematisch dargestellte optische Sensor 11, hier in der Ausgestaltung als Staubmessgerät zum Ermitteln der in einem Messbereich 12 vorhandenen Konzentration von Staubpartikeln 50, umfasst einen Lichtsender 13 zum Aussenden von Sendelichtstrahlen 15 sowie einen Lichtempfänger 17 zum Empfangen von Empfangslichtstrahlen 19. Der Lichtsender 13 kann als Leuchtdiode oder Laserdiode ausgeführt sein. Bei dem Lichtempfänger 17 kann es sich um eine einfache Fotodiode oder um einen ortsauflösenden Detektor wie eine Diodenzeile oder ein CCD-Array handeln. Dem Lichtsender 13 und dem Lichtempfänger 17 können jeweilige Strahlformungsoptiken zugeordnet sein, was in Fig. 1 jedoch nicht dargestellt ist. Wie gezeigt sind der Lichtsender 13 und der Lichtempfänger 17 einander zugewandt und weisen eine gemeinsame optische Achse 20 auf, das heißt der Lichtsender 13 und der Lichtempfänger 17 sind auf einem geradlinigen optischen Pfad angeordnet.

Bei dem dargestellten Ausführungsbeispiel ist der optische Sensor 11 zweiteilig ausgeführt, wobei ein erstes Teil durch ein geschlossenes Basisgehäuse 23 und das andere Teil durch einen Reflektor 25 gebildet ist. Der Lichtsender 13 und der Lichtempfänger 17 sind in dem geschlossenen, vorzugsweise explosionsgeschützten Basisgehäuse 23 untergebracht, während sich der Messbereich 12 außerhalb des Basisgehäuses 23 befindet.

Zum Erfassen der Staubkonzentration in dem Messbereich 12 werden die Sendelichtstrahlen 15 von einer ersten Spiegeleinheit 27 um etwa 90° umgelenkt, sodass sie durch ein erstes Messfenster 29 hindurch aus dem Basisgehäuse 23 austreten, den Messbereich 12 durchqueren und auf den Reflektor 25 auftreffen. Der Reflektor 25 bewirkt eine direkte Rückreflexion des auftreffenden Lichts, sodass dieses den Messbereich 12 abermals durchquert, als Empfangslichtstrahlen 19 durch ein zweites Messfenster 31 hindurch wieder in das Basisgehäuse 23 eintritt und von einer zweiten Spiegeleinheit 35 in Richtung des Lichtempfängers 17 umgelenkt wird.

Eine nicht dargestellte elektronische Auswerteeinheit steht mit dem Lichtempfänger 17 in Verbindung und ist in der Lage, anhand der von dem Lichtempfänger 17 empfangenen Empfangslichtstrahlen 19 die Staubkonzentration in dem Messbereich 12 zu ermitteln und ein entsprechendes Staubkonzentrationssignal auszugeben.

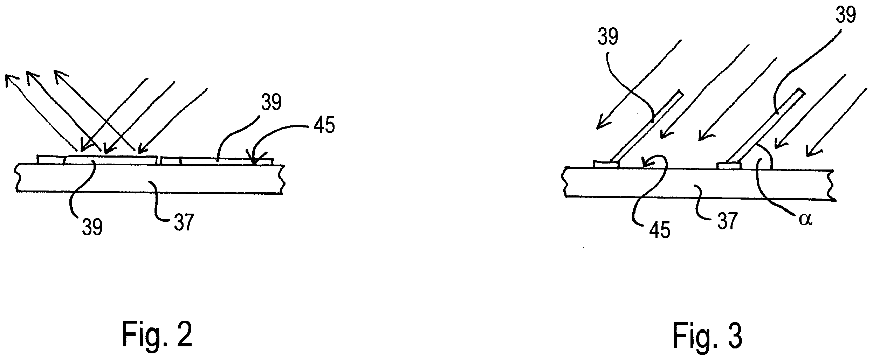

Die beiden in Fig. 2 und 3 einzeln gezeigten Spiegeleinheiten 27, 35 weisen jeweils ein plattenförmiges Substrat 37 auf, das zumindest für den Wellenlängenbereich, in welchem der Lichtsender 13 Licht abstrahlt, transparent ist. An dem transparenten Substrat 37 sind mehrere Mikrospiegelelemente 39 in Form flacher reflektierender Lamellen schwenkbar angeordnet. Die Mikrospiegelelemente 39 können jeweils einen Siliziumoxinitrid-Träger mit einer reflektierenden Aluminium-Beschichtung umfassen und eine Größe von etwa 0,5 mm² aufweisen. Der Einfachheit halber sind in Fig. 1 nur vier Mikrospiegelelemente 39 pro Substrat 37 dargestellt. In der Praxis weisen als Mikrospiegelarrays ausgestaltete Spiegeleinheiten wesentlich mehr Mikrospiegelelemente pro Substrat auf.

Jedes der Mikrospiegelelemente 39 steht in elektrischer Verbindung mit zugehörigen transparenten Elektroden (nicht gezeigt). Durch Anlegen geeigneter Spannungen an die Elektroden können die Mikrospiegelelemente 39 wahlweise wie in Fig. 2 gezeigt geschlossen oder wie in Fig. 3 gezeigt geöffnet werden.

Wenn sich die Mikrospiegelelemente 39 wie in Fig. 2 gezeigt in der geschlossenen Stellung befinden, liegen sie auf der Lichteinfallsfläche 45 des Substrats 37 und reflektieren daher das eintreffende Licht, wie durch Pfeile dargestellt ist. Die betreffende Spiegeleinheit 27, 35 befindet sich dann in einem Reflexionszustand.

Vorzugsweise bedecken die Mikrospiegelelemente 39 die Lichteinfallsfläche 45 zu wenigstens 90%, wenn sich die Spiegeleinheit 27, 35 in dem Reflexionszustand befindet.

Wenn sich die Mikrospiegelelemente 39 wie in Fig. 3 gezeigt in der geöffneten Stellung befinden, sind sie gegenüber der Lichteinfallsfläche 45 um einen Kippwinkel α von etwa 45° gekippt. Ferner ist jede der Spiegeleinheiten 27, 35 derart angeordnet, dass ihre Mikrospiegelelemente 39 zumindest im Wesentlichen parallel zu einer Haupteinfallsrichtung der Sendelichtstrahlen oder der Empfangslichtstrahlen ausgerichtet sind, wenn sie sich in der geöffneten Stellung befinden. Die betreffende Spiegeleinheit 27, 35 befindet sich dann in einem Transmissionszustand, in welchem auf die Spiegeleinheit 27, 35 einfallende Lichtstrahlung an den Mikrospiegelelementen 39 vorbei durch das transparente Substrat 37 hindurchgelangt.

Der Reflektor 25 umfasst eine Anordnung von Reflektor-Spiegeleinheiten 49, die ebenso gestaltet und angeordnet sind wie die erste Spiegeleinheit 27 und die zweite Spiegeleinheit 35. In Fig. 1 sind zwei Reflektor-Spiegeleinheiten 49 gezeigt, die nebeneinander und zueinander abgewinkelt angeordnet sind. Der Reflektor 25 könnte auch mehr als zwei Reflektor-Spiegeleinheiten 49 umfassen, die nebeneinander und abwechselnd gekippt angeordnet sind, also die Konfiguration eines Katzenauges aufweisen. Diese Ausgestaltung ermöglicht das Bereitstellen einer relativ großen Reflektorfläche bei gleichzeitig geringer Tiefe des Reflektors.

Eine nicht dargestellte Steuereinrichtung des Sensors 11 ist dazu ausgebildet, die Spiegeleinheiten 27, 35 je nach Betriebszustand des Sensors 11 zwischen dem Transmissionszustand, dem Reflexionszustand sowie gegebenenfalls weiteren Funktionszuständen zu verstellen, wie nachfolgend genauer ausgeführt wird.

Wenn wie in Fig. 1 gezeigt sowohl die erste Spiegeleinheit 27 als auch die zweite Spiegeleinheit 35 in den Reflexionszustand gestellt sind, werden die Sendelichtstrahlen 15 aus dem geradlinigen optischen Pfad ausgekoppelt und nach zweimaligem Durchqueren des Messbereichs 12 als Empfangslichtstrahlen 19 wieder in den geradlinigen optischen Pfad eingekoppelt. Dies entspricht einem Normalmodus des Sensors 11.

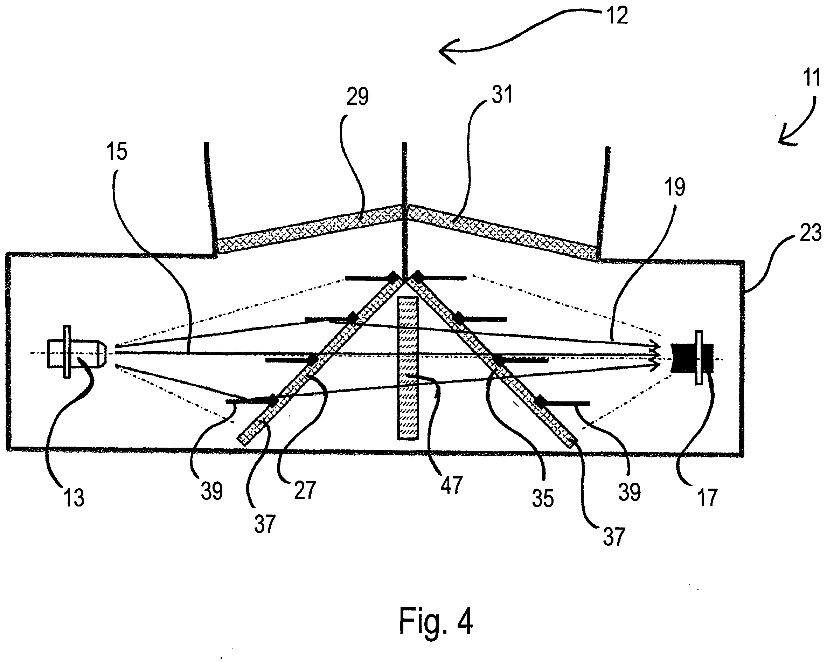

Wenn hingegen wie in Fig. 4 gezeigt sowohl die erste Spiegeleinheit 27 als auch die zweite Spiegeleinheit 35 in den Transmissionszustand gestellt sind, gelangen die Sendelichtstrahlen 15 durch die Substrate 37 der ersten Spiegeleinheit 27 und der zweiten Spiegeleinheit 35 hindurch ohne Durchquerung des Messbereichs 12 zum Lichtempfänger 17. Zwischen den beiden Spiegeleinheiten 27, 35 ist ein kalibrierter Trübungsfilter 47 angeordnet. Die in Fig. 4 gezeigte Konfiguration des Sensors 11 entspricht einem Kontrollmodus, in welchem die Ausgangsleistung des Lichtsenders 13 ermittelt und/oder angepasst wird.

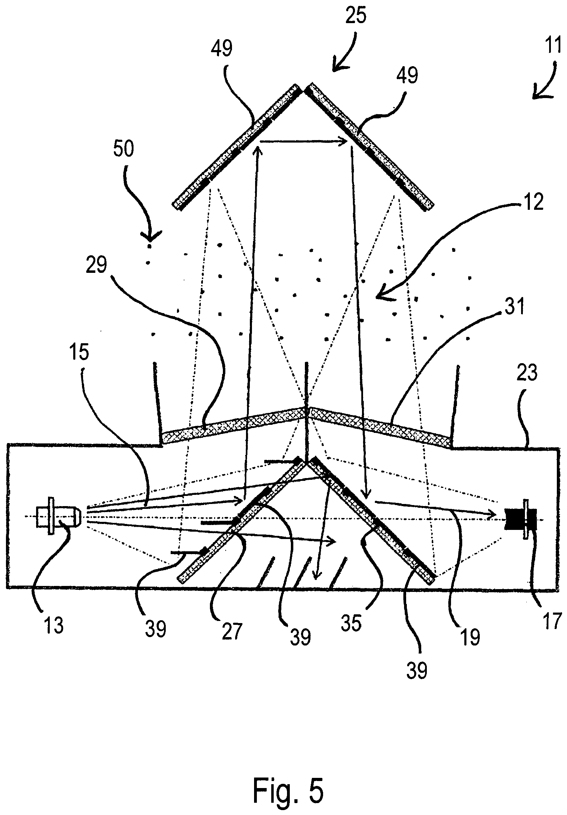

Fig. 5 zeigt einen weiteren Betriebszustand eines erfindungsgemäßen Sensors 11, bei welchem die zweite Spiegeleinheit 35 in den Reflexionszustand gestellt ist, wohingegen die erste Spiegeleinheit 27 in einen teildurchlässigen Zustand gestellt ist. Der teildurchlässige Zustand wird dadurch erzielt, dass ein Teil der Mikrospiegelelemente 39 in die geöffnete Stellung gestellt wird und ein anderer Teil der Mikrospiegelelemente 39 in die geschlossene Stellung gestellt wird. Dadurch kann die zum Lichtempfänger 17 zurückgelangende Lichtmenge bei gleichbleibender Ausgangsleistung des Lichtsenders 13 gestuft verringert werden, um so z. B. in einem Testmodus einen "Spantest" durchzuführen.

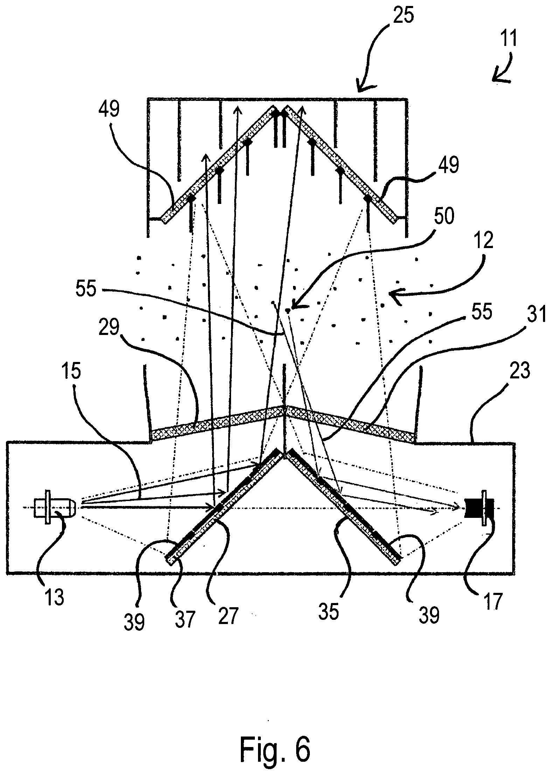

Bei dem in Fig. 6 gezeigten Betriebszustand sind die erste Spiegeleinheit 27 und die zweite Spiegeleinheit 35 in den Reflexionszustand gestellt, wohingegen die Reflektor-Spiegeleinheiten 49 jeweils in den Transmissionszustand gestellt sind. Der Reflektor 25 wirkt dann wie eine Lichtfalle und lässt kein reflektiertes Licht zum Basisgehäuse 23 zurückgelangen. Lediglich an Staubpartikeln 50 gestreute Lichtstrahlen 55 gelangen zum Lichtempfänger 17. In diesem Betriebszustand kann somit eine reine Streulichtmessung erfolgen. Durch Kombination einer Transmissionsmessung und einer Streulichtmessung ist eine Ermittlung einer Größenverteilung der Staubpartikel 50 möglich.

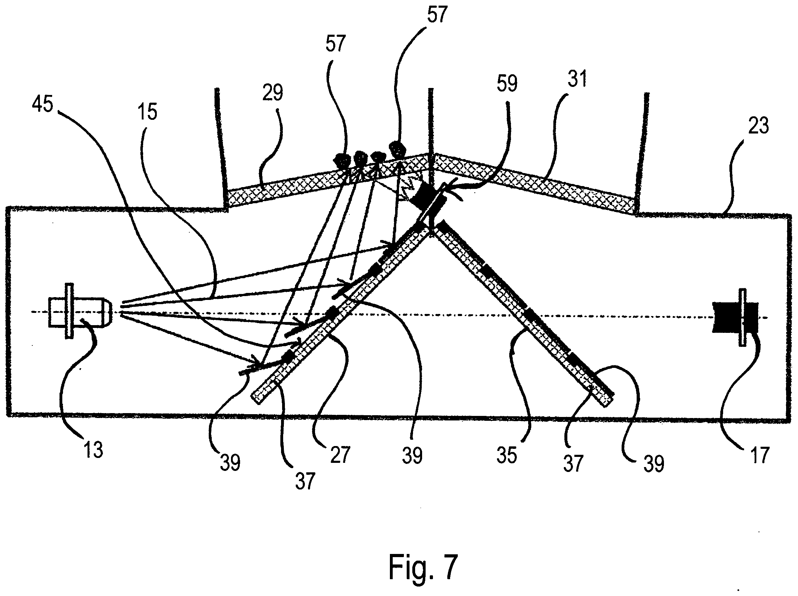

Fig. 7 zeigt einen weiteren Betriebszustand eines erfindungsgemäßen optischen Sensors 11, welcher der Überprüfung des ersten Messfensters 29 auf Verschmutzungen dient. Die erste Spiegeleinheit 27 ist hierbei in einen Abbildungszustand gestellt, in welchem die Mikrospiegelelemente 39 gegenüber der Lichteinfallsfläche 45 derart um unterschiedliche Kippwinkel gekippt sind, dass die erste Spiegeleinheit 27 insgesamt wie ein Hohlspiegel wirkt, welcher die Sendelichtstrahlen 15 auf das erste Messfenster 29 fokussiert. Dadurch ergibt sich am ersten Messfenster 29 eine relativ hohe Beleuchtungsstärke. Am ersten Messfenster 29 befindliche Schmutzpartikel 57 streuen das Licht zurück, was durch einen Verschmutzungsdetektor 59 in Form eines weiteren Lichtempfängers erkannt wird. Bei übermäßig starker Verschmutzung des ersten Messfensters 29 gibt die Steuereinrichtung ein geeignetes Warn- oder Wartungssignal aus.

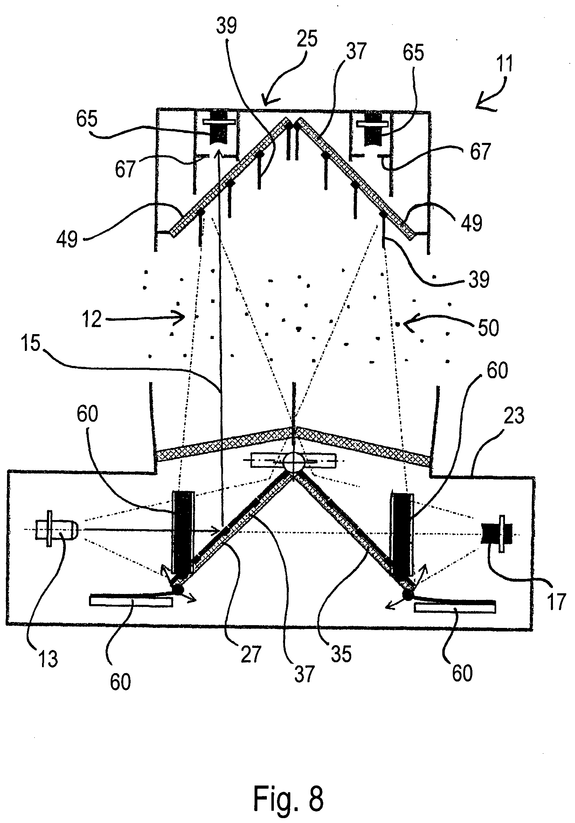

Der in Fig. 8 gezeigte erfindungsgemäße optische Sensor 11 ist im Prinzip so gestaltet wie vorstehend unter Bezugnahme auf Fig. 1-7 beschrieben. Die erste Spiegeleinheit 27 und die zweite Spiegeleinheit 35 sind jedoch mittels jeweiliger piezoelektrischer Aktuatoren 60 um zwei rechtwinklig zueinander verlaufende Schwenkachsen verschwenkbar. Auf diese Weise kann eine exakte Ausrichtung der Sendelichtstrahlen 15 relativ zum Reflektor 25 erfolgen. Um den Ausrichtvorgang zu erleichtern, sind Positionssensoren 65 in Form weiterer Lichtempfänger in dem Reflektor 25 angeordnet. Den Positionssensoren 65 sind bei dem dargestellten Beispiel Blenden 67 zugeordnet. Zum Ausrichten werden die Reflektor-Spiegeleinheiten 49 wie gezeigt in den Transmissionszustand gestellt, damit die hinter den Reflektor-Spiegeleinheiten 49 befindlichen Positionssensoren 65 die Sendelichtstrahlen 15 detektieren. Wenn das von dem betreffenden Positionssensor 65 ausgegebene Intensitätssignal einen Maximalwert aufweist, sind die Sendelichtstrahlen 15 optimal ausgerichtet.

Durch zeitweiliges Betreiben der ersten Spiegeleinheit 27, der zweiten Spiegeleinheit 35 und/oder der Reflektor-Spiegeleinheiten 49 in Transmission statt in Reflexion kann der erfindungsgemäße optische Sensor 11 in vielfältiger Weise abweichend vom Normalmodus verwendet werden. Von besonderem Vorteil ist hierbei, dass Spiegeleinheiten auf Basis von Mikrospiegelarrays kurze Schaltzeiten aufweisen, sodass auch ein schneller zyklischer Wechsel zwischen unterschiedlichen Betriebszuständen möglich ist, beispielsweise mit Frequenzen von 1Hz bis 60Hz. Somit ist auch ein quasi-kontinuierliches Überprüfen der ungeschwächten Ausgangsintensität während des Messens möglich, wobei unerwünschte Datenlücken vermieden werden.

### Bezugszeichenliste:

- 11: optischer Sensor
- 12: Messbereich
- 13: Lichtsender
- 15: Sendelichtstrahl
- 17: Lichtempfänger
- 19: Empfangslichtstrahl
- 20: optische Achse
- 23: Basisgehäuse
- 25: Reflektor
- 27: erste Spiegeleinheit
- 29: erstes Messfenster
- 31: zweites Messfenster
- 35: zweite Spiegeleinheit
- 37: Substrat
- 39: Mikrospiegelelement
- 45: Lichteinfallsfläche
- 47: Trübungsfilter
- 49: Reflektor-Spiegeleinheit
- 50: Staubpartikel
- 55: gestreuter Lichtstrahl
- 57: Schmutzpartikel
- 59: Verschmutzungsdetektor
- 60: piezoelektrischer Aktuator
- 65: Positionssensor
- 67: Blende
- α: Kippwinkel

## Patentansprüche

1. Optischer Sensor (11) umfassend einen Lichtsender (13) zum Aussenden von Sendelichtstrahlen (15) in einen Messbereich (12), einen Lichtempfänger (17) zum Empfangen von Empfangslichtstrahlen (19) aus dem Messbereich (12), eine Auswerteeinheit zum Ermitteln einer Eigenschaft des Messbereichs (12) anhand der von dem Lichtempfänger (17) empfangenen Empfangslichtstrahlen (19), wenigstens eine Spiegeleinheit (27, 35, 49) zur Steuerung der Sendelichtstrahlen (15) und/oder der Empfangslichtstrahlen (19), wobei die Spiegeleinheit (27, 35, 49) mehrere Mikrospiegelelemente (39) mit wenigstens bereichsweise reflektierender Oberfläche und eine mit den Mikrospiegelelementen (39) in elektrischer Verbindung stehende Elektroden-Anordnung umfasst, und eine Steuereinrichtung, die dazu ausgebildet ist, die wenigstens eine Spiegeleinheit (27, 35, 49) durch Ansteuern der Elektroden-Anordnung zwischen wenigstens zwei unterschiedlichen Funktionszuständen zu verstellen,
**dadurch gekennzeichnet, dass**
die wenigstens zwei unterschiedlichen Funktionszustände einen Transmissionszustand und einen Reflexionszustand umfassen, dass die Spiegeleinheit (27, 35, 49) ein zumindest im Wesentlichen transparentes Substrat (37) umfasst, an dem die Mikrospiegelelemente (39) angeordnet sind, wobei die Steuereinrichtung dazu ausgebildet ist, die Spiegeleinheit (27, 35, 49) zeitweilig in den Transmissionszustand zu stellen, in welchem die Mikrospiegelelemente (39) jeweils gegenüber der Lichteinfallsfläche (45) oder der Lichtaustrittsfläche des Substrats (37) um einen Kippwinkel (α) gekippt werden, so dass sich die die Mikrospiegelelemente (39) in einer geöffneten Stellung befinden und auf die Spiegeleinheit (27, 35, 49) einfallende Lichtstrahlung an den Mikrospiegelelementen (39) vorbei durch das transparente Substrat (37) hindurchgelangt, wobei die Sendelichtstrahlen (15) durch das Substrat (37) der Spiegeleinheit (27, 35) hindurch ohne Durchquerung des Messbereichs (12) zum Lichtempfänger (17) gelangen, wenn die Spiegeleinheit (27, 35) in den Transmissionszustand gestellt ist, und dass
die Steuereinrichtung dazu ausgebildet ist, die wenigstens eine Spiegeleinheit (27, 35, 49) zeitweilig in den Reflexionszustand zu stellen, in welchem die Mikrospiegelelemente (39) auf der Lichteinfallsfläche (45) oder auf der Lichtaustrittsfläche des Substrats (37) liegen, so dass die Mikrospiegelelemente (39) die Lichteinfallsfläche (45) oder die Lichtaustrittsfläche des Substrats (37) wenigstens teilweise bedecken, wobei die Spiegeleinheit (27) die Sendelichtstrahlen (15) in den Messbereich (12) umlenkt, wenn sie in den Reflexionszustand gestellt ist.

2. Optischer Sensor nach Anspruch 1,
**dadurch gekennzeichnet, dass**
die Steuereinrichtung dazu ausgebildet ist, die Spiegeleinheit (27, 35, 49) bei Vorliegen eines Kontroll-, Abgleich- oder Korrekturkriteriums in den Transmissionszustand zu stellen.

3. Optischer Sensor nach einem der vorstehenden Ansprüche,
**dadurch gekennzeichnet, dass**
die Spiegeleinheit (27, 35, 49) derart angeordnet ist, dass die Mikrospiegelelemente (39) zumindest im Wesentlichen parallel zu einer Haupteinfallsrichtung der Sendelichtstrahlen (15) oder der Empfangslichtstrahlen (19) ausgerichtet sind, wenn die Spiegeleinheit (27, 35, 49) in den Transmissionszustand gestellt ist.

4. Optischer Sensor nach einem der vorstehenden Ansprüche,
**dadurch gekennzeichnet, dass**
die Mikrospiegelelemente (39) in dem Reflexionszustand die Lichteinfallsfläche (45) oder die Lichtaustrittsfläche der Spiegeleinheit (27, 35, 49) zu wenigstens 75% oder zu wenigstens 90% bedecken.

5. Optischer Sensor nach einem der vorstehenden Ansprüche,
**dadurch gekennzeichnet dass**
die Steuereinrichtung dazu ausgebildet ist, die Spiegeleinheit (27, 35, 49) während des Sensorbetriebs zyklisch zwischen dem Reflexionszustand und dem Transmissionszustand zu verstellen.

6. Optischer Sensor nach einem der vorstehenden Ansprüche,
**dadurch gekennzeichnet, dass**
der Lichtsender (13) und der Lichtempfänger (17) auf einem geradlinigen optischen Pfad angeordnet sind und der Messbereich (12) von dem geradlinigen optischen Pfad beabstandet ist, wobei die Spiegeleinheit (27) die Sendelichtstrahlen (15) zum Umlenken in den Messbereich (12) aus dem geradlinigen optischen Pfad auskoppelt, wenn sie in den Reflexionszustand gestellt ist.

7. Optischer Sensor nach Anspruch 6,
**dadurch gekennzeichnet, dass**
der Sensor (11) eine weitere Spiegeleinheit (35) umfasst, welche ein zumindest im Wesentlichen transparentes Substrat (37) mit daran angeordneten Mikrospiegelelementen (39) umfasst und welche zwischen einem Transmissionszustand und einem Reflexionszustand verstellbar ist, wobei die weitere Spiegeleinheit (35) die aus dem Messbereich (12) tretenden Empfangslichtstrahlen (19) in den geradlinigen optischen Pfad einkoppelt, wenn sie in den Reflexionszustand gestellt ist.

8. Optischer Sensor nach einem der vorstehenden Ansprüche,
**dadurch gekennzeichnet, dass**
die Mikrospiegelelemente (39) durch jeweilige Einzel-Elektroden der Elektroden-Anordnung individuell ansteuerbar sind.

9. Optischer Sensor nach Anspruch 8,
**dadurch gekennzeichnet, dass**
die Steuereinrichtung dazu ausgebildet ist, die Spiegeleinheit (27, 35, 49) durch Ansteuern der Einzel-Elektroden zeitweilig in einen teildurchlässigen Zustand zu stellen, in welchem sich lediglich ein Teil der Mikrospiegelelemente (39) in einer geöffneten Stellung befindet.

10. Optischer Sensor nach Anspruch 8 oder 9,
**dadurch gekennzeichnet, dass**
die Steuereinrichtung dazu ausgebildet ist, die Spiegeleinheit (27, 35, 49) durch Ansteuern der Einzel-Elektroden zeitweilig in einen Abbildungszustand zu stellen, in welchem die Mikrospiegelelemente (39) gegenüber einer Lichteinfallsfläche (45) oder einer Lichtaustrittsfläche des Substrats (37) derart um unterschiedliche Kippwinkel (α) gekippt sind, dass die Spiegeleinheit (27, 35, 49) insgesamt eine konkav oder konvex gewölbte Spiegelfläche definiert.

11. Optischer Sensor nach Anspruch 10,
**dadurch gekennzeichnet, dass**
der Lichtsender (13) und die Spiegeleinheit (27) in einem geschlossenen Gehäuse (23) angeordnet sind, welches wenigstens ein Messfenster (29) umfasst, und dass die Spiegeleinheit (27) eine Fokussierung der Sendelichtstrahlen (15) auf eine Oberfläche des Messfensters (29) bewirkt, wenn sie in den Abbildungszustand gestellt ist.

12. Optischer Sensor nach einem der vorstehenden Ansprüche,
**dadurch gekennzeichnet, dass**
der Lichtsender (13) und der Lichtempfänger (17) in einem geschlossenen Gehäuse (23) angeordnet sind, welches wenigstens ein Messfenster (29, 31) umfasst, wobei sich der Messbereich (12) außerhalb des Gehäuses (23) befindet und der Sensor (11) einen Reflektor (25) umfasst, der die Lichtstrahlen nach Durchqueren des Messbereichs (12) zurück in das Gehäuse (23) lenkt.

13. Optischer Sensor nach Anspruch 12,
**dadurch gekennzeichnet, dass**
die Spiegeleinheit (49) in den Reflektor (25) integriert ist.

14. Optischer Sensor nach einem der vorstehenden Ansprüche,
**dadurch gekennzeichnet, dass**
der Sensor (11) wenigstens einen Aktuator (60) zum Verschieben und/oder Verdrehen der Spiegeleinheit (27, 35, 49) umfasst.

## Claims

1. An optical sensor (11) comprising a light transmitter (13) for transmitting transmitted light beams (15) into a measured zone (12); a light receiver (17) for receiving received light beams (19) from the measured zone (12); an evaluation unit for determining a property of the measured zone (12) using the received light beams (19) received by the light receiver (17); at least one mirror unit (27, 35, 49) for controlling the transmitted light beams (15) and/or the received light beams (19), with the mirror unit (27, 35, 49) comprising a plurality of micromirror elements (39) having an at least regionally reflective surface and comprising an electrode arrangement electrically connected to the micromirror elements (39); and a control device that is configured to adjust the at least one mirror unit (27, 35, 49) between at least two different functional states by controlling the electrode arrangement,
**characterized in that**
the at least two different functional states comprise a transmission state and a reflection state; **in that**
the mirror unit (27, 35, 49) comprises an at least substantially transparent substrate (37) at which the micromirror elements (39) are arranged, with the control device being configured to temporarily set the mirror unit (27, 35, 49) into the transmission state in which the micromirror elements (39) are each tilted by a tilt angle (α) with respect to a light incidence surface (45) or a light exit surface of the substrate (37) such that the micromirror elements (39) are in an open position and light radiation incident onto the mirror unit (27, 35, 49) moves past the micromirror elements (39) through the transparent substrate (37), with
the transmitted light beams (15) moving through the substrate (37) of the mirror unit (27, 35) without passing through the measured zone (12) to the light receiver (17) when the mirror unit (27, 35) is set into the transmission state; and **in that**
the control device is configured to temporarily set the at least one mirror unit (27, 35, 49) into the reflection state in which the micromirror elements (39) are disposed on the light incidence surface (45) or on the light exit surface of the substrate (37) such that the micromirror elements (39) at least party cover the light incidence surface (45) or the light exit surface of the substrate (37), with
the mirror unit (27) deflecting the transmitted light beams (15) into the measured zone (12) when it is set into the reflection state.

2. An optical sensor in accordance with claim 1,
**characterized in that**
the control device is configured to set the mirror unit (27, 35, 49) into the transmission state on the presence of a control criterion, a comparison criterion or a correction criterion.

3. An optical sensor in accordance with one of the preceding claims,
**characterized in that**
the mirror unit (27, 35, 49) is arranged such that the micromirror elements (39) are aligned at least substantially in parallel with a main direction of incidence of the transmitted light beams (15) or of the received light beams (19) when the mirror unit (27, 35, 49) is set into the transmission state.

4. An optical sensor in accordance with any one of the preceding claims,
**characterized in that**
the micromirror elements (39) cover at least 75% or at least 90% of the light incidence surface (45) or of the light exit surface of the mirror unit (27 35, 49) in the reflection state.

5. An optical sensor in accordance with any one of the preceding claims,
**characterized in that**
the control device is configured to adjust the mirror unit (27, 35, 49) cyclically between the reflection state and the transmission state during sensor operation.

6. An optical sensor in accordance with any one of the preceding claims,
**characterized in that**
the light transmitter (13) and the light receiver (17) are arranged on a straight-line optical path and the measured zone (12) is spaced apart from the straight-line optical path, with the mirror unit (27) decoupling the transmitted light beams (15) from the straight-line optical path for deflection into the measured zone (12) when it is set into the reflection state.

7. An optical sensor in accordance with claim 6,
**characterized in that**
the sensor (11) comprises a further mirror unit (35) that comprises an at least substantially transparent substrate (37) having micromirror elements (39) arranged thereat and that can be adjusted between a transmission state and a reflection state, with the further mirror unit (35) coupling the received light beams (19) exiting the measured zone (12) into the straight-line optical path when it is set into the reflection state.

8. An optical sensor in accordance with any one of the preceding claims,
**characterized in that**
the micromirror elements (39) are individually controllable by respective individual electrodes of the electrode arrangement.

9. An optical sensor in accordance with claim 8,
**characterized in that**
the control device is configured to temporarily set the mirror unit (27, 35, 49) into a partly transmitting state in which only some of the micromirror elements (39) are in an open position by controlling the individual electrodes.

10. An optical sensor in accordance with claim 8 or claim 9,
**characterized in that**
the control device is configured to temporarily set the mirror unit (27, 35, 49) into an imaging state by controlling the individual electrodes, in which state the micromirror elements (39) are tilted by different tilt angles (α) with respect to a light incidence surface (45) or a light exit surface of the substrate (37) such that the mirror unit (27, 35, 49) overall defines a concavely or convexly arched mirror surface.

11. An optical sensor in accordance with claim 10,
**characterized in that**
the light transmitter (13) and the mirror unit (27) are arranged in a closed housing (23) that comprises at least one measurement window (29); and **in that** the mirror unit (27) effects a focusing of the transmitted light beams (15) on a surface of the measurement window (29) when it is set into the imaging state.

12. An optical sensor in accordance with any one of the preceding claims,
**characterized in that**
the light transmitter (13) and the light receiver (17) are arranged in a closed housing (23) that comprises at least one measurement window (29, 31), with the measured zone (12) being located outside the housing (23) and the sensor (11) comprising a reflector (25) that directs the light beams back into the housing (23) after passing through the measured zone (12).

13. An optical sensor in accordance with claim 12,
**characterized in that**
the mirror unit (49) is integrated into the reflector (25).

14. An optical sensor in accordance with any one of the preceding claims,
**characterized in that**
the sensor (11) comprises at least one actuator (60) for moving and/or rotating the mirror unit (27, 35, 49).

## Revendications

1. Capteur optique (11) comportant un émetteur de lumière (13) pour émettre des rayons lumineux d'émission (15) dans une zone de mesure (12), un récepteur de lumière (17) pour recevoir des rayons lumineux de réception (19) depuis la zone de mesure (12), une unité d'évaluation pour déterminer une propriété de la zone de mesure (12) en se basant sur les rayons lumineux de réception (19) reçus par le récepteur de lumière (17), au moins une unité formant miroir (27, 35, 49) pour commander les rayons lumineux d'émission (15) et/ou les rayons lumineux de réception (19),
dans lequel
l'unité formant miroir (27, 35, 49) comprend plusieurs éléments micro-miroirs (39) à surface au moins localement réfléchissante et un agencement d'électrodes en connexion électrique avec les éléments micro-miroirs (39), et un dispositif de commande qui est réalisé pour déplacer ladite au moins une unité formant miroir (27, 35, 49) par pilotage de l'agencement d'électrodes entre au moins deux états de fonctionnement différents,
**caractérisé en ce que**
lesdits au moins deux états de fonctionnement différents incluent un état de transmission et un état de réflexion,
**en ce que** l'unité formant miroir (27, 35, 49) comprend un substrat (37) au moins sensiblement transparent sur lequel sont agencés les éléments micro-miroirs (39),
le dispositif de commande étant réalisé pour mettre l'unité formant miroir (27, 35, 49) temporairement dans l'état de transmission dans lequel les éléments micro-miroirs (39) sont basculés chacun d'un angle de basculement (α) par rapport à la surface d'incidence de lumière (45) ou par rapport à la surface de sortie de lumière du substrat (37), de sorte que les éléments micro-miroirs (39) se trouvent dans une position ouverte et que le rayonnement lumineux incident sur l'unité formant miroir (27, 35, 49) traverse le substrat transparent (37) en passant le long des éléments micro-miroirs (39),
les rayons lumineux d'émission (15) parviennent jusqu'au récepteur de lumière (17) à travers le substrat (37) de l'unité formant miroir (27, 35) sans traverser la zone de mesure (12) lorsque l'unité formant miroir (27, 35) est mise dans l'état de transmission, et que
le dispositif de commande est réalisé pour mettre ladite au moins une unité formant miroir (27, 35, 49) temporairement dans l'état de réflexion dans lequel les éléments micro-miroirs (39) se trouvent sur la surface d'incidence de lumière (45) ou sur la surface de sortie de lumière du substrat (37), de telle sorte que les éléments micro-miroirs (39) recouvrent au moins partiellement la surface d'incidence de lumière (45) ou la surface de sortie de lumière du substrat (37), et
l'unité formant miroir (27) renvoie les rayons lumineux d'émission (15) dans la zone de mesure (12) lorsqu'elle est mise dans l'état de réflexion.

2. Capteur optique selon la revendication 1,
**caractérisé en ce que**
le dispositif de commande est réalisé pour mettre l'unité formant miroir (27, 35, 49) dans l'état de transmission en présence d'un critère de contrôle, d'ajustement ou de correction.

3. Capteur optique selon l'une des revendications précédentes,
**caractérisé en ce que**
l'unité formant miroir (27, 35, 49) est agencée de telle sorte que les éléments micro-miroirs (39) sont orientés au moins sensiblement parallèlement à une direction d'incidence principale des rayons lumineux d'émission (15) ou des rayons lumineux de réception (19) lorsque l'unité formant miroir (27, 35, 49) est mise dans l'état de transmission.

4. Capteur optique selon l'une des revendications précédentes,
**caractérisé en ce que**
dans l'état de réflexion les éléments micro-miroirs (39) recouvrent la surface d'incidence de lumière (45) ou la surface de sortie de lumière de l'unité formant miroir (27, 35, 49) au moins sur 75 % ou au moins sur 90 %.

5. Capteur optique selon l'une des revendications précédentes,
**caractérisé en ce que**
le dispositif de commande est réalisé pour déplacer l'unité formant miroir (27, 35, 49) pendant le fonctionnement du capteur cycliquement entre l'état de réflexion et l'état de transmission.

6. Capteur optique selon l'une des revendications précédentes,
**caractérisé en ce que**
l'émetteur de lumière (13) et le récepteur de lumière (17) sont agencés sur un chemin optique rectiligne, et la zone de mesure (12) est espacée du chemin optique rectiligne, l'unité formant miroir (27) découplant les rayons lumineux d'émission (15) hors du chemin optique rectiligne pour les renvoyer dans la zone de mesure (12), lorsqu'elle est mise dans l'état de réflexion.

7. Capteur optique selon la revendication 6,
**caractérisé en ce que**
le capteur (11) comprend une autre unité formant miroir (35) qui comprend un substrat (37) au moins sensiblement transparent avec des éléments micro-miroirs (39) agencés sur celui-ci et qui est déplaçable entre un état de transmission et un état de réflexion, et l'autre unité formant miroir (35) couple dans le chemin optique rectiligne les rayons lumineux de réception (19) sortant hors de la zone de mesure (12), lorsqu'elle est mise dans l'état de réflexion.

8. Capteur optique selon l'une des revendications précédentes,
**caractérisé en ce que**
les éléments micro-miroirs (39) sont pilotables individuellement par des électrodes individuelles respectives de l'agencement d'électrodes.

9. Capteur optique selon la revendication 8,
**caractérisé en ce que**
le dispositif de commande est réalisé pour mettre l'unité formant miroir (27, 35, 49) temporairement dans un état partiellement passant par pilotage des électrodes individuelles, état dans lequel une partie seulement des éléments micro-miroirs (39) se trouve dans une position ouverte.

10. Capteur optique selon la revendication 8 ou 9,
**caractérisé en ce que**
le dispositif de commande est réalisé pour mettre l'unité formant miroir (27, 35, 49) temporairement dans un état d'imagerie par pilotage des électrodes individuelles, état dans lequel les éléments micro-miroirs (39) sont basculés de différents angles de basculement (α) par rapport à une surface d'incidence de lumière (45) ou par rapport à une surface de sortie de lumière du substrat (37), de telle sorte que l'unité formant miroir (27, 35, 49) définit dans l'ensemble une surface miroir bombée concave ou convexe.

11. Capteur optique selon la revendication 10,
**caractérisé en ce que**
l'émetteur de lumière (13) et l'unité formant miroir (27) sont agencés dans un boîtier fermé (23) qui comprend au moins une fenêtre de mesure (29), et **en ce que** l'unité formant miroir (27) procure une focalisation des rayons lumineux d'émission (15) sur une surface de la fenêtre de mesure (29), lorsqu'elle est mise dans l'état d'imagerie.

12. Capteur optique selon l'une des revendications précédentes,
**caractérisé en ce que**
l'émetteur de lumière (13) et le récepteur de lumière (17) sont agencés dans un boîtier fermé (23) qui comprend au moins une fenêtre de mesure (29, 31), la zone de mesure (12) se situant à l'extérieur du boîtier (23) et le capteur (11) comprenant un réflecteur (25) qui dirige les rayons lumineux en retour dans le boîtier (23) une fois qu'ils ont traversé la zone de mesure (12).

13. Capteur optique selon la revendication 12,
**caractérisé en ce que**
l'unité formant miroir (49) est intégrée dans le réflecteur (25).

14. Capteur optique selon l'une des revendications précédentes,
**caractérisé en ce que**
le capteur (11) comprend au moins un actionneur (60) pour translater et/ou tourner l'unité formant miroir (27, 35, 49).
